# EUROPEAN PATENT APPLICATION

(11) **EP 3 574 786 A1**
(43) Date of publication of application: **04.12.2019**
(21) Application number: 18744635.6
(22) Date of filing: 24.01.2018
(51) Int. Cl.: A43B 13/12, A43B 7/20, A43B 7/24

(54) **SOLE STRUCTURE**

(30) Priority: 25.01.2017 CN 201720101831 U
(71) Applicant: Qingyuan Global Technology Services Ltd., Qingyuan City, Guangdong 511800 (CN)
(72) Inventor: LUH, Yih-Ping, Taipei 104 (TW)
(74) Representative: dompatent von Kreisler Selting Werner - Partnerschaft von Patent- und Rechtsanwälten mbB
(86) International application number: PCT/CN2018/073973
(87) International publication number: WO 2018/137648

(57) **Abstract**

The present disclosure provides a sole structure, comprising an outsole, a carbon filter sheet and a midsole. The carbon filter sheet is disposed on the outsole, and comprises at least one heel protection portion. The midsole is disposed on the carbon filter sheet.

## Description

### BACKGROUND OF THE INVENTION

### 1. Field of the Invention

The present disclosure relates to a sole structure; in particular, the present disclosure relates to a sole structure having the function to protect ankles.

### 2. Description of the Prior Art

Along with technological progress and easier access to knowledge, the demand for products with more functions is on the rise. Such demand is not only for consumer electronics, but also for sporting goods. In general, basketball shoes have become essential accessories for playing basketball.

In the early days, many basketball shoes were short-tops. However, when players ran quickly in the court or fight for rebound, their feet could easily flip out when they inadvertently stepped on a slippery place or on the feet of others, which further caused sports injury such as severe sprain on ankle joints.

### SUMMARY OF THE INVENTION

Accordingly, the objective of the present disclosure is to provide a sole structure having the function to protect ankles. The sole structure comprises an outsole, a carbon filter sheet and a midsole. The carbon filter sheet is disposed on the outsole, and comprises at least one heel protection portion. The midsole is disposed on the carbon filter sheet.

In one embodiment, the carbon filter sheet further comprises a sole portion connected to the heel portions. Most of the sole portion overlaps with the midsole, and the heel protection portion corresponds to the tail end of the midsole.

In one embodiment, the carbon filter sheet further comprises an upper protection portion connected to the heel protection portion, and the upper protection portion extends upward from the tail end of the heel protection portion and then protrudes forward, and the length of the protruding part is longer than that of the two sides of the heel protection portion. The heel protection portion and the upper protection portion correspond to the tail end of the midsole.

In one embodiment, the outsole consists, sequentially from top to bottom, of a top rubber sheet, a midsole fabric and a bottom rubber sheet, the bottom rubber sheet has a side wall, the side wall at least partially covers the carbon fiber sheet.

In one embodiment, the material of the midsole fabric includes fiberglass.

In one embodiment, the material of the midsole includes thermoplastic polyester or ethylene vinyl acetate copolymer.

In one embodiment, the midsole fabric comprises a first midsole cloth and a second midsole cloth. A first gap exists between the first midsole cloth and the second midsole cloth. The first midsole cloth corresponds to the front end of the midsole. The second midsole cloth corresponds to the tail end of the midsole. The first gap at least partially corresponds to the heel protection portion.

In one embodiment, the bottom rubber sheet comprises a first bottom rubber sheet, a second bottom rubber sheet and a third bottom rubber sheet. A second gap exists between the first bottom rubber sheet and the second bottom rubber sheet, and a third gap exists between the second bottom rubber sheet and the third bottom rubber sheet. The first bottom rubber sheet corresponds to a front portion of the first midsole cloth. The second bottom rubber sheet corresponds to the rear portion of the first midsole cloth. The third bottom rubber sheet corresponds to the second midsole cloth. The third gap corresponds to the first gap.

In one embodiment, the second gap is smaller than the third gap.

In one embodiment, the second gap substantially corresponds to a middle portion of the first midsole cloth.

In one embodiment, the side of the first bottom rubber sheet has a first side wall, the second bottom rubber sheet has a second side wall, and the third bottom rubber sheet has a third side wall. The first side wall at least partially covers the front portion of the first midsole cloth, the second side wall at least partially covers the rear portion of the first midsole cloth, and the third side wall at least partially covers the heels.

In one embodiment, the first side wall is formed by extending upward from the two sides of the first bottom rubber sheet separately and the extensions are partially connected. The second side wall is formed by extending upward from the two sides of the second bottom rubber sheet separately, and the third side wall is formed by extending upward from the two sides of the third bottom rubber sheet separately and the extensions are partially connected.

Compared to prior art, the sole structure according to the present disclosure may prevent a backward force in the foot by having the integrally-formed carbon filter sheet, and further achievie the effect of protecting the ankles.

### BRIEF DESCRIPTION OF THE DRAWINGS

FIG. 1A is an exploded-view drawing of the sole structure according to an exemplary embodiment of the present disclosure.
FIG. 1B is a diagram illustrating the embodiment of FIG. 1A applied to a shoe upper.
FIG. 2A is an exploded-view drawing of the sole structure according to another embodiment of the present disclosure.
FIG. 2B is a diagram illustrating the embodiment of FIG. 2A applied to a shoe upper.

### DETAILED DESCRIPTION OF THE PREFERRED EMBODIMENT

Various embodiments of the present disclosure will be described with reference to the accompanying drawings as follows. For the purpose of a clear description, various practical details (embodiments) will be illustrated together in the following description. However, it should be understood that practical details (embodiments) are not intended to limit the scope of the present disclosure. In addition, to simplify the FIGs., some common structures and elements in the attachment FIGs. will be illustrated as a simple diagram.

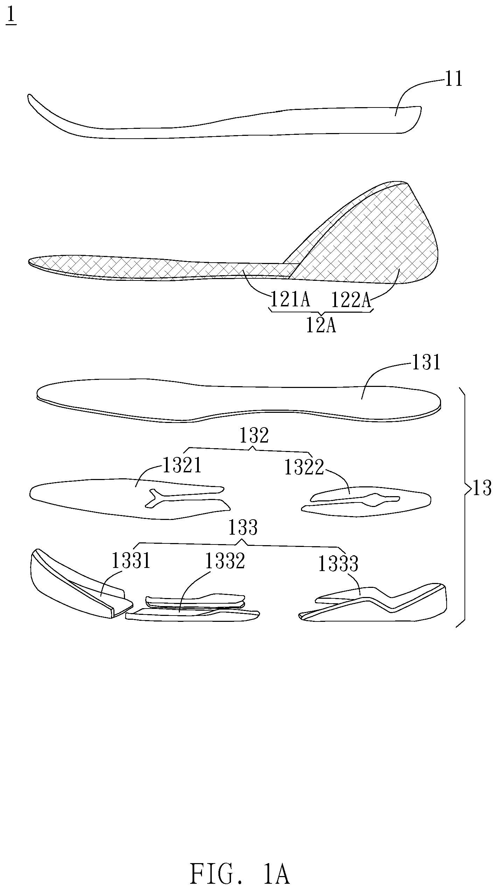

Please refer to FIG. 1A. A sole structure 1 comprises a midsole 11, a carbon filter sheet 12A and an outsole 13. The midsole 11 is preferably but not limited to Thermoplastic Polyester Elastomer (TPEE), Ethylene Vinyl Acetate (EVA) or the like. The outsole 13 consists, sequentially from top to bottom, of a top rubber sheet, a midsole fabric 132 and a bottom rubber sheet 133. The material of the midsole fabric 132 is preferably but not limited to Fiber Glass Reinforced Plastics (FRP). Then, the midsole 11 is disposed on the carbon filter sheet 12A.

Wherein, the bottom rubber sheet 133 has a side wall (that is, the extension that goes upward from a side of the bottom rubber sheet 133 in the FIG.) and partially covers the carbon filter sheet 12A.The side wall may be connected to the upper of the shoe by way of suture, junction, bonding and the like. The sole structure according to the present embodiment is preferably but not limited to be used in basketball shoes.

The carbon filter sheet 12A is disposed on the outsole 13, and consists of preferably but not limited to flexible carbon fiber, and has a sole portion 121A and a heel protection portion 122A connected thereto. Specifically, the sole portion 121A is located between the midsole 11 and the top rubber sheet 131, and mostly overlaps with the midsole 11. The heel protection portion 122A is formed by extending the tail end and the sides of the sole portion 121A upwards integrally, where the front end of the combination of 121A and 122A appears to be open and the rear end appears to be closed, giving it an outer appearance similar to a funnel form. When actually used, the sole portion 121A mainly corresponds to the sole of a human body, and the heel protection portion 122A can cover the heel of a human body.

Through the design of the carbon fiber sheet 12A, when player's ankles are in a high level of activities, the carbon filter sheet 12A may prevent backward force in the heel, and further protects the ankles.

In the present embodiment, the midsole fabric 132 preferably forms a weaved cloth with a grid structure of multiple grids by way of unrestrictive weaving, wherein the size of each grid is preferably but not limited to within the range of 0.2mm to 4mm. In addition, the top rubber sheet 131, the midsole fabric 132 and the bottom rubber sheet 133 are used to form the outsole 13 by applying heat pressurization to make the top rubber sheet 131 pass through the grid structure of the midsole fabric 132 and be bonded to the bottom rubber sheet 133. Thus, the outsole 13, according to the present disclosure, is stronger, and can not be easily torn off like common thin rubber.

The midsole 11 is preferably but not limited to being pasted on the carbon filter sheet 12A. The carbon filter sheet 12A may be pasted or not be pasted on the outsole 13. Specifically, the carbon filter sheet 12A is configured to cover the top rubber sheet 131, and the carbon filter sheet 12A and top rubber sheet 131 may be fixed/bonded or not fixed/bonded each other. Wherein, the top rubber sheet 131 is preferably able to be bonded to the carbon filter sheet 12A by an adhesive, but not limited to that. In another embodiment, that may also be achieved by way of bonding by extrusion, connecting by shot, etc.

In the present embodiment, the midsole fabric 132 preferably consists of the first midsole cloth 1321 and the second midsole cloth 1322, which are separated from each other. Here, the distance between the first midsole cloth 1321 and the second midsole cloth 1322 is defined to be a first gap. The position of the first midsole cloth 1321 corresponds roughly to the front end of the midsole 11, and to the sole of the human body when the shoe is actually worn. The position of the second midsole cloth 1322 corresponds roughly to the tail end of the midsole 11, and to the heel of the human body when the shoe is actually worn. The first gap at least partially corresponds to the heel protection portion 122A, and to the arch of the human body when the shoe is actually worn.

The bottom rubber sheet 133 preferably consists of the first bottom rubber sheet 1331, the second bottom rubber sheet 1332 and the third bottom rubber sheet 1333, which are separated from each other. Wherein, a second gap exists between the first bottom rubber sheet 1331 and the second bottom rubber sheet 1332, and a third gap exists between the second bottom rubber sheet 1332 and the third bottom rubber sheet 1333. The position of the first bottom rubber sheet 1331 corresponds to the front portion of the first midsole cloth 1321; the position of the second bottom rubber sheet 1332 corresponds to the rear portion of the first midsole cloth1321; the position of the third bottom rubber sheet 1333 corresponds to the second midsole cloth 1322. The third gap roughly corresponds to the first gap. The second gap is preferably smaller than the third gap, and the second gap preferably corresponds roughly to the middle portion of the first midsole cloth 1321.

Please refer to FIG. 1A. The first bottom rubber sheet 1331 has a first side wall (that is, the height of extending upward), the second bottom rubber sheet 1332 has a second wall, and the third bottom rubber sheet 1333 has a third side wall. Each of the first side wall, the second side wall and the third side wall may be connected to an upper by way of pasting, bonding or suture.

Wherein, the first side wall is preferably formed by extending upward from the two sides of the first bottom rubber sheet 1331 separately and partially connected, which may be seen to be connected at the position corresponding to the tip of the toes of human bodies (that is, surrounding a portion of the tip of the toes of human bodies). The first side wall at least partially covers the front portion of the first midsole cloth 1321; the second wall is formed by extending upward from the two sides of the second bottom rubber sheet 1332 separately, and at least partially covers the rear portion of the first midsole cloth 1321. The third wall is preferably formed by extending upward from the two sides of the third bottom rubber sheet 1333 and the extensions are partially connected, which may be seen to be connected at the position corresponding to the heel of the human body (that is, surrounding the heel of the human body). The third wall at least partially covers the heel protection portion 122A.

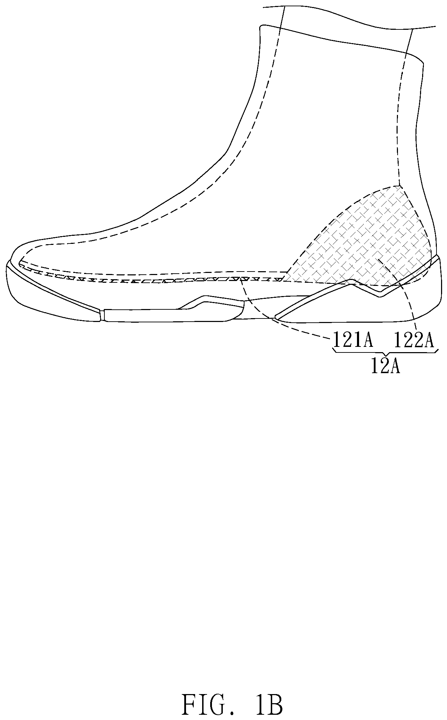

Please refer to FIG. 1B. FIG. 1B is a diagram illustrating the sole structure 1 of FIG. 1A applied to an upper of a basketball shoe. As described above, a side wall of the outsole is connected to the upper separately by way of pasting, bonding or suture. As illustrated in the FIGs., the heel protection portion 122A can cover the heel portion of a human body.

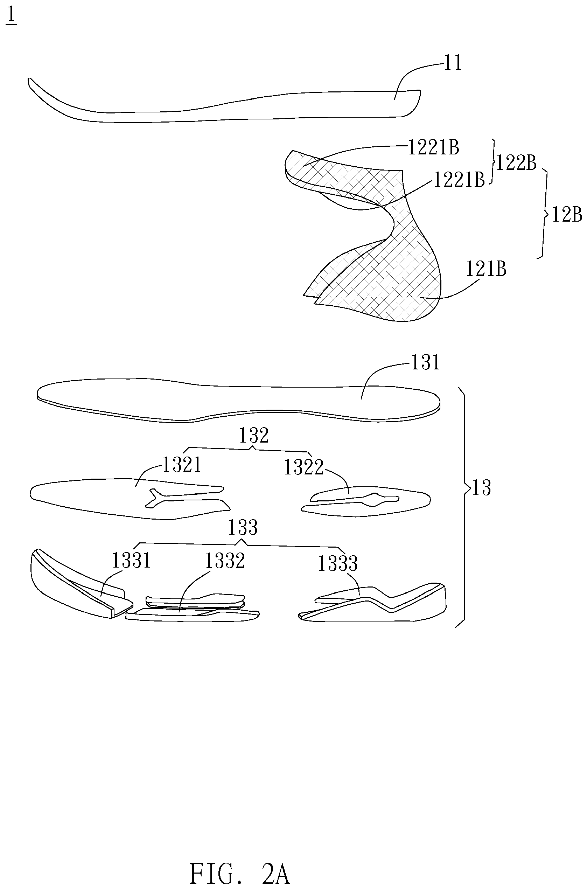

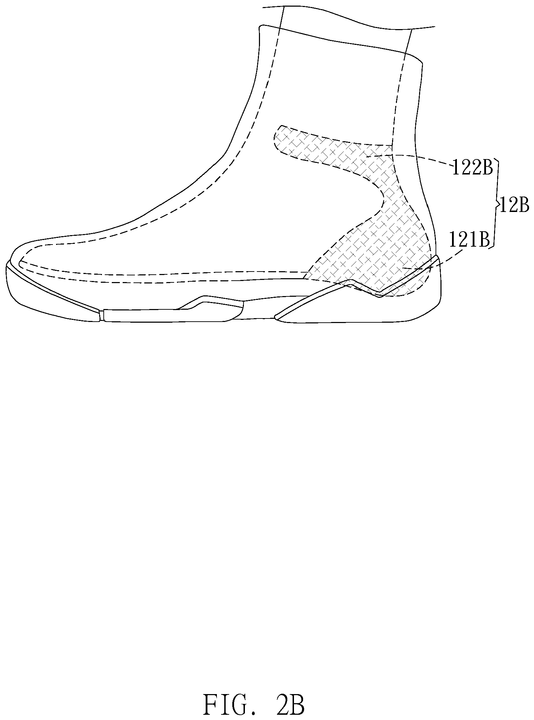

For another embodiment of the present disclosure, please refer to FIG. 2A and FIG. 2B. The sole structure according to the present embodiment is similar to the abovementioned embodiment, wherein, the midsole 11 and the outsole 13 have the same detailed structures. We will not go into further details here. The difference between them is the structure of the carbon filter sheet.

As illustrated in FIGs., the carbon filter sheet 12B preferably also comprises the heel protection portion 121B and the upper protection portion 122B connected thereto. The heel protection portion 121B and the upper protection portion 122B correspond to the tail end of the midsole. The upper protection portion 122B is integrally formed by extending upward from the heel protection portion 121B; specifically, the upper protection portion 122B is formed by extending upward from the tail end of the heel protection portion 121B and then protrudes forward, and the length of the protruding portion is a little longer than that of the two sides of the heel protection portion 121B.

In detail, the upper protection portion 122B preferably further comprises bilateral buckle portions 1221B. The upper protection portion 122B extends from the tail end of the heel protection portion 121B in the direction opposite to the outsole 13, and protrudes towards the front end of midsole to form the buckle portion 1221B, and the length of the buckle portion is longer than that of the two sides of the heel protection portion 121B.

When the shoe is actually worn, the heel protection portions 121B mainly appears to stick to and cover the calcaneus (heels) of human body. The upper protection portion 122B extends upward from the part of the heel protection portion 121B that surrounds the heel along the Achilles tendon, until it passes the protruding bones on two sides of the ankle (that is, the ankle bones). The buckle portion 1221B formed by extending the upper protection portion 122B forward from the heel tendon will partially surround (that is, not completely closed) the fibulas and tibias. As a whole, the upper protection portion 122B roughly appears to look like a horseshoe, and its end is connected to the heel protection portion 121B; the heel protection portion 121B appears to look like a funnel.

When actually used, in addition to preventing backward force in the foot, the upper protection portion 122B may also provide a protective effect for portions of fibulas and tibias, that is, it may provide a lateral protection for human feet.

In the present embodiment, the bottom of the heel protection portion 121B may be connected to the top of the top rubber sheet 131.

FIG. 2B illustrates an aspect of the sole structure binding to the upper. Such upper is preferably but not limited to an upper of basketball shoes. The figure illustrates how the heel protection portion 121B of the carbon filter sheet 12B and the upper protection portion 122B can stick to a foot of the human body.

In another embodiment, to increase the fixity between the carbon filter sheet 12B and a human body, holes may be disposed separately on the front end of the upper protection portion 122B. A shoelace may be used to pass through the holes of the upper protection portion 122B and the holes on the upper and be tied. Thus, higher fixity may be provided.

Compared to prior art, the sole structure according to the present disclosure may prevent a backward force in the foot by having the integrally-formed carbon filter sheet, and further achievie the effect of protecting the ankles.

Various embodiments described above are illustrated for the purpose of clarifying the technical features and idea of the present disclosure, and are not intended to limit the present disclosure to any specific embodiment. On the other hand, the purpose of that is to make various alternatives and equivalents be included in the scope of the technical idea of the present disclosure. Thus, the scope of the technical idea of the present disclosure should be interpreted the most widely according to above description, so that any possible alternatives and equivalents may be included in the scope of the technical idea of the present disclosure.

## Claims

1. A sole structure, comprising:
an outsole;
a carbon fiber sheet disposed on the outsole, the carbon fiber sheet comprising at least one heel protection portions and a sole portion connected to the heel protection portion, the heel protection portion is formed by extending a tail end and a side of the sole portion upwards integrally, and a front end of the heel protection is opened and a rear end of the heel protection is closed; and
a midsole disposed on the carbon fiber sheet.

2. The sole structure according to claim 1, wherein most part of the sole portion overlaps with the midsole, and the heel protection portion corresponds to a tail end of the midsole.

3. The sole structure according to claim 1, wherein the carbon fiber sheet further comprises an upper protection portion connected to the heel protection portion, the upper protection portion extends from a tail end of the heel portion to a direction opposite to the outsole and protrudes from a front end of the midsole to form a buckle portion, and the length of the buckle portion is larger than that of the heel protection portion measured between two sides of the heel protection portion .

4. The sole structure according to claim 3, wherein the heel protection portion and the upper protection portion correspond to a tail end of the midsole.

5. The sole structure according to claim 1, wherein the outsole consists, sequentially from top to bottom, of a top rubber sheet, a midsole fabric and a bottom rubber sheet, the bottom rubber sheet has a side wall, and the side wall at least partially covers the carbon fiber sheet.

6. The sole structure according to claim 5, wherein a material of the midsole fabric comprises a fiberglass.

7. The sole structure according to claim 1, wherein a material of the midsole comprises thermoplastic polyester elastomer or ethylene vinyl acetate copolymer.

8. The sole structure according to claim 5, wherein the midsole fabric comprises a first midsole cloth and a second midsole cloth, a first gap exists between the first midsole cloth and the second midsole cloth, the first midsole cloth corresponds to a front end of the midsole, the second midsole cloth corresponds to a tail end of the midsole, and the first gap at least partially corresponds to the heel protection portion.

9. The sole structure according to claim 8, wherein the bottom rubber sheet comprises a first bottom rubber sheet, a second bottom rubber sheet and a third bottom rubber sheet, a second gap exists between the first bottom rubber sheet and the second bottom rubber sheet, a third gap between the second bottom rubber sheet and the third bottom rubber sheet, the first bottom rubber sheet corresponds to a front portion of the first midsole cloth, the second bottom rubber sheet corresponds to a rear portion of the first midsole cloth, the third bottom rubber sheet corresponds to the second midsole cloth, and the third gap corresponds to the first gap.

10. The sole structure according to claim 9, wherein the second gap is smaller than the third gap.

11. The sole structure according to claim 9, wherein the second gap substantially corresponds to a middle portion of the first midsole cloth.

12. The sole structure according to claim 9, wherein the first bottom rubber sheet has a first side wall, the second bottom rubber sheet has a second side wall, the third bottom rubber sheet has a third side wall, the first side wall at least partially covers the front portion of the first midsole cloth, the second side wall at least partially covers the rear portion of the first midsole cloth, and the third side wall at least partially covers the heel protection portion.

13. The sole structure according to claim 12, wherein the first side wall is formed by extending upward from the two sides of the first bottom rubber sheet separately and partially connected, the second side wall is formed by extending upward from the two sides of the second bottom rubber sheet separately, the third side wall is formed by extending upward from the two sides of the third bottom rubber sheet separately and partially connected.
